# EUROPEAN PATENT APPLICATION

(11) **EP 4 835 551 A1**
(43) Date of publication of application: **04.11.2026**
(21) Application number: 24910226.0
(22) Date of filing: 24.10.2024
(51) Int. Cl.: G02F 1/035, G02F 1/313, G02B 6/12

(54) **OPTICAL WAVEGUIDE AND PREPARATION METHOD THEREFOR**

(30) Priority: 29.12.2023 CN 202311846859; 29.12.2023 CN 202311849020
(71) Applicant: Lightstandard Co., Ltd., Suzhou, Jiangsu 215000 (CN)
(72) Inventor: CHENG, Tangsheng, Suzhou, Jiangsu 215000 (CN); PU, Huanan, Suzhou, Jiangsu 215000 (CN); HU, Zixin, Suzhou, Jiangsu 215000 (CN)
(74) Representative: Novagraaf International SA
(86) International application number: PCT/CN2024/126989
(87) International publication number: WO 2025/139285

(57) **Abstract**

The present invention relates to an optical waveguide, comprising: an optical waveguide layer; a modulation layer located on the optical waveguide layer, wherein a first isolation layer is disposed between the optical waveguide layer and the modulation layer, and a first protective layer covers the modulation layer; the optical waveguide further comprising: a second isolation layer surrounding the first isolation layer and the modulation layer, and a second protective layer surrounding the first protective layer, the second isolation layer, and the optical waveguide layer; wherein the modulation layer is enclosed in a sealed cavity defined by the first protective layer, the first isolation layer, and the second isolation layer, and the modulation layer is a phase-change material layer or comprises a phase-change material layer. Accordingly, the present invention also provides a method for preparing the optical waveguide.

## Description

### REFERENCE TO RELATED APPLICATIONS

This application claims the priority of the Chinese invention patent application No. 202311846859X, filed on December 29, 2023, and entitled "optical waveguide and preparation method therefor", and the Chinese invention patent application No. 2023118490201, filed on December 29, 2023, and entitled "optical waveguide and preparation method therefor", both of which are incorporated herein by reference in their entirety.

### TECHNICAL FIELD

The present invention relates to an optical waveguide, and in particular, to an optical waveguide and preparation method therefor.

### BACKGROUND

In an optical circuit, light can be controllably guided through an optical waveguide network via various optical switching devices and power splitting devices. Such devices typically operate by controlling the phase of light in the waveguides. For example, by tuning the phase of Silicon-On-Insulator (SOI) waveguides, microring resonators and Mach-Zehnder Interferometers (MZIs) can implement optical switching and power splitting functions. Additionally, directional couplers can evanescently couple different amounts of light between closely spaced waveguides by tuning their relative phase. Phase shifting mechanisms are generally based on the thermo-optic effect or the free-carrier dispersion effect. However, due to the weak perturbation of the refractive index, the waveguide length required in such devices to achieve a desired phase shift is relatively long. For instance, an MZI can achieve a required π phase shift over approximately 500 µm. Microrings have a small footprint, but their operating bandwidth is limited by resonance conditions. Another approach is to use Micro-Electromechanical System (MEMS) switches in optical circuits, wherein individual coupling waveguides can be mechanically moved to adjust coupling efficiency. Nevertheless, compared with conventional non-mechanical approaches, this method suffers from slow switching speed (on the order of milliseconds), a less compact structure, and relatively high manufacturing cost and complexity. Importantly, the above techniques have issues of instability and short service life, i.e., the state of a device controlling the optical phase needs to be maintained under constant power consumption, and MEMS devices have a limited lifetime due to their mechanical structures. Phase-Change Materials (PCMs) possess inherent non-volatility and have been widely used in photonic applications, including photonic memory devices, rewritable optical disks, optical filters, displays, and optical switches. PCMs can be readily deposited on arbitrary substrates using standard methods and can be switched between the amorphous and crystalline states at high speed and with long-term stability. Upon switching between the amorphous and crystalline states, the refractive index changes drastically. Compact optical switches with Ge₂Sb₂Te₅(GST) and Ge₂Sb₂Se₄Te₁ (GSST) on top of waveguide couplers have been demonstrated to exhibit high switching speed (100 ns) and low power consumption. Therefore, PCM-based photonic devices offer several advantages over conventional optical switching schemes and hold promise for developing large-scale non-volatile reconfigurable photonic routing systems, such as field-programmable coupler arrays and the like.

On this basis, the prior art has proposed a novel optical waveguide. For example, Chinese invention patent application No. CN202180043314.8 discloses an optical waveguide provided with a phase-change material layer that exhibits low absorption loss in the amorphous state (i.e., an extinction coefficient substantially less than 0.1) and a large difference in optical coefficients between the crystalline and amorphous states, and the phase-change material layer is switchable between at least two stable solid states: the amorphous state and the crystalline state. However, the stability of the optical waveguide with such a structure still needs further improvement.

### SUMMARY

The object of the present invention is to provide an optical waveguide and a method for fabricating the same, which partially solve or alleviate the above-mentioned deficiencies in the prior art, wherein the stability of the modulation layer in the optical waveguide when switching between the amorphous state and the crystalline state is more reliable.

To solve the above-mentioned technical problems, the present invention specifically adopts the following technical solutions: In a first aspect, the present invention provides an optical waveguide, comprising: an optical waveguide layer, and a modulation layer located on the optical waveguide layer, wherein a first isolation layer is provided between the optical waveguide layer and the modulation layer, and the modulation layer is covered with a first protective layer; and, a second isolation layer surrounding the first isolation layer and the modulation layer, wherein the second isolation layer has an inverted L-shaped cross-section; and, a second protective layer surrounding the first protective layer, the second isolation layer, and the optical waveguide layer; wherein the modulation layer is enclosed in a sealed cavity together defined by the first protective layer, the first isolation layer and the second isolation layer; and the modulation layer is or comprises a phase-change material layer.

In some embodiments, the first isolation layer and the second isolation layer together define a second groove having an opening facing the first protective layer, and a height from a groove bottom of the second groove to a top opening thereof is greater than or equal to a thickness of the modulation layer.

In some embodiments, the second groove is formed by etching, by a regional etching method, the second isolation layer that is pre-coated on the optical waveguide layer and has a T-shaped or concave-shaped cross-section and the second protective layer coated on the optical waveguide layer and the second isolation layer.

In some embodiments, the phase-change material layer is formed by sputtering a phase-change material onto the first isolation layer; and/or the first protective layer is deposited on the phase-change material layer by a physical vapor deposition process or a chemical vapor deposition process.

In some embodiments, an upper surface of the first protective layer is flush with an upper surface of the second protective layer.

In some embodiments, a thickness of the first isolation layer is 1 nm-100 nm. In some embodiments, a length of the first isolation layer extending along a length direction of the optical waveguide is 1 µm-10 µm.

In some embodiments, a thickness of the first protective layer is 0.1 µm-3 µm. In some embodiments, a thickness of the modulation layer is 1 nm-1 µm.

In some embodiments, a length of the modulation layer extending along the length direction of the optical waveguide is 1 µm-10 µm.

In some embodiments, the phase-change material layer is made of a superlattice material.

In some embodiments, the phase-change material layer is formed of a chalcogenide compound containing antimony or selenium.

In some embodiments, the phase-change material layer comprises a chalcogenide compound, wherein the chalcogenide compound includes at least one of Sb₂Se₃, SbSe, Sb₂S₃, SbS, and Ge₂Sb₂Se₄Te.

In some embodiments, the phase-change material of the phase-change material layer comprises a compound, an alloy, or a mixture thereof, wherein the compound or the alloy contains one or more of germanium, antimony, selenium, and vanadium oxide; wherein the compound includes at least one of NbOx, GeTe, GeSb, GaSb, AgInSbTe, InSb, InSbTe, InSe, SbTe, TeGeSbS, AgSbSe, SbSe, GeSbMnSn, AgSbTe, AuSbTe and AlSb.

In some embodiments, the optical waveguide comprises a metal interconnect layer embedded in the second protective layer; and/or the optical waveguide layer has a rectangular or convex-shaped cross-section. In some embodiments, the first protective layer is made of one or more of SiO₂, Al₂O₃, and ITO; and/or the second protective layer is made of one or more of SiO₂, Al₂O₃, and ITO; and/or the first isolation layer is made of one or both of Si₃N₄, and TiN; and/or the second isolation layer is made of one or both of Si₃N₄ and TiN.

In a second aspect, the present invention provides a method for preparing the above-described optical waveguide, comprising the steps of: S1021: integrating an optical waveguide layer on a substrate to form an optical waveguide platform; S1023: forming, on an outer surface of the optical waveguide layer exposed above the substrate, a second stop layer having a third thickness and a second oxide layer having a second thickness by physical vapor deposition or chemical vapor deposition, wherein the second stop layer is located above the optical waveguide layer and has a T-shaped or concave-shaped cross-section, and a width of a vertical portion of the T-shaped second stop layer is greater than a width of the optical waveguide layer, or a width of the concave-shaped second stop layer is greater than the width of the optical waveguide layer; S1025: performing a windowing process on the second stop layer and the second oxide layer by regional etching, so that the second stop layer forms, on the optical waveguide layer, a first isolation layer having a fourth thickness and a second isolation layer surrounding the first isolation layer and having an inverted L-shaped cross-section, wherein the fourth thickness is less than the third thickness; S1027: using a first thin-film deposition process to deposit a phase-change material onto a surface of the first isolation layer by physical vapor deposition, so as to form a phase-change material layer with a predetermined thickness in a window defined by the first isolation layer and the second isolation layer surrounding the first isolation layer, the predetermined thickness being less than or equal to a difference between the third thickness and the fourth thickness; S1029: depositing, using a second thin-film deposition process, an oxide layer of the same material as that in step S1013 onto the phase-change material layer to cover the same, so as to obtain a first protective layer having a sixth thickness.

In a third aspect, the present invention provides an optical waveguide, comprising: an optical waveguide layer, and a modulation layer located on the optical waveguide layer, wherein a first isolation layer is provided between the optical waveguide layer and the modulation layer, the modulation layer being covered with a first protective layer; a second isolation layer surrounding the first isolation layer and a first region of the modulation layer adjacent to the first isolation layer, and a second protective layer surrounding the first protective layer, a second region of the modulation layer adjacent to the first protective layer, the second isolation layer, and the optical waveguide layer; wherein the modulation layer is enclosed in a sealed cavity defined by the first protective layer, the second protective layer, the first isolation layer and the second isolation layer, and the modulation layer is or comprises a phase-change material layer.

In some embodiments, the first protective layer and the second protective layer together define a first groove having an inverted concave-shaped cross-section, wherein the second protective layer surrounds the first protective layer and the second region of the modulation layer; the first isolation layer and the second isolation layer together define a second groove having a concave-shaped cross-section, wherein the second isolation layer surrounds the first isolation layer and the first region of the modulation layer; and openings of the first groove and the second groove are arranged opposite to each other, so that the first groove and the second groove together define the sealed cavity having a rectangular cross-section.

In some embodiments, the first protective layer and the second protective layer together define a first groove having an inverted U-shaped cross-section, wherein the second protective layer surrounds the first protective layer and the second region of the modulation layer; the first isolation layer and the second isolation layer together define a second groove having a U-shaped cross-section, wherein the second isolation layer surrounds the first isolation layer and the first region of the modulation layer; and in the same cross-section, a distance between opposite sidewalls of the first groove gradually decreases in a direction approaching the optical waveguide layer, while a distance between opposite sidewalls of the second groove gradually increases in a direction away from the optical waveguide layer, and the opening of the first groove and the opening of the second groove are arranged opposite to each other, so that the sidewalls of the first groove and the sidewalls of the second groove are smoothly connected and together define the sealed cavity having a bowl-shaped or horn-shaped configuration.

In some embodiments, the first isolation layer forms a bottom of a cavity having a top opening, the cavity being formed by regionally etching the second protective layer and the second isolation layer pre-coated on the optical waveguide layer; and/or the phase-change material layer is formed by sputtering a phase-change material on the first isolation layer; and/or the first protective layer is deposited on the modulation layer by a physical vapor deposition process or a chemical vapor deposition process.

In some embodiments, an upper surface of the first protective layer is flush with an upper surface of the second protective layer.

In some embodiments, a thickness of the first isolation layer is 1 nm-100 nm. In some embodiments, a length of the first isolation layer extending along a length direction of the optical waveguide is 1 µm-10 µm. In some embodiments, a thickness of the first protective layer is 0.1 µm-3 µm. In some embodiments, a thickness of the modulation layer is 1 nm-1 µm.

In some embodiments, a length of the modulation layer extending along the length direction of the optical waveguide is 1 µm-10 µm.

In some embodiments, the phase-change material layer is made of a superlattice material.

In some embodiments, the phase-change material layer is formed of a chalcogenide compound containing antimony or selenium.

In some embodiments, the phase-change material layer comprises the chalcogenide compound, wherein the chalcogenide compound includes at least one of Sb₂Se₃, SbSe, Sb₂S₃, SbS, and Ge₂Sb₂Se₄Te.

In some embodiments, the phase-change material of the phase-change material layer comprises a compound, an alloy, or a mixture thereof, wherein the compound or the alloy contains one or more of germanium, antimony, selenium, and vanadium oxide; wherein the compound includes at least one of: NbOx, GeTe, GeSb, GaSb, AgInSbTe, InSb, InSbTe, InSe, SbTe, TeGeSbS, AgSbSe, SbSe, GeSbMnSn, AgSbTe, AuSbTe, and AlSb.

In some embodiments, the optical waveguide comprises a metal interconnect layer embedded in the second protective layer; and/or the optical waveguide layer has a rectangular or convex-shaped cross-section.

In some embodiments, the first protective layer is made of one or more of SiO₂, Al₂O₃, and ITO; and/or the second protective layer is made of one or more of SiO₂, Al₂O₃, and ITO; and/or the first isolation layer is made of one or both of Si₃N₄ and TiN; and/or the second isolation layer is made of one or both of Si₃N₄ and TiN.

In a fourth aspect, the present invention provides a method for preparing the above-described optical waveguide, comprising the steps of: S1011, integrating an optical waveguide layer on a substrate to form an optical waveguide platform; S1013, forming, on an outer surface of the optical waveguide layer exposed above the substrate, a second stop layer having a first thickness and a second oxide layer having a second thickness by physical vapor deposition or chemical vapor deposition, wherein the second stop layer is located above the optical waveguide layer and has a width greater than a width of the optical waveguide layer; S1015, performing a windowing process on the second stop layer and the second oxide layer by regional etching, so that the second stop layer forms, on the optical waveguide layer, a first isolation layer having a fourth thickness and the second isolation layer surrounding the first isolation layer, the fourth thickness being less than the first thickness; S1017, using a first thin-film deposition process to deposit a phase-change material onto a surface of the first isolation layer exposed in a window by physical vapor deposition, so as to form a phase-change material layer with a predetermined thickness, wherein a sum of the predetermined thickness and the fourth thickness is greater than the first thickness; S1019, using a second thin-film deposition process to deposit an oxide layer of the same material as in step S1013 onto the phase-change material layer to cover the phase-change material layer, so as to obtain a first protective layer having a sixth thickness.

In a fifth aspect, the present invention provides a method for preparing an optical waveguide, comprising the steps of: S1021, integrating an optical waveguide layer on a substrate to form an optical waveguide platform; S1023, forming, on an outer surface of the optical waveguide layer exposed above the substrate, a second stop layer having a fourth thickness and a second oxide layer having a second thickness by physical vapor deposition or chemical vapor deposition, wherein the second stop layer is located above the optical waveguide layer and has a T-shaped or concave-shaped cross-section, and a width of a vertical portion of the T-shaped second stop layer is greater than a width of the optical waveguide layer, or a width of the concave-shaped second stop layer is greater than the width of the optical waveguide layer; and the fourth thickness is 1 nm-100 nm; S1025, performing a windowing process on the second stop layer and the second oxide layer by regional etching, so that the second stop layer forms, on the optical waveguide layer, a first isolation layer having a thickness less than the fourth thickness, and a second isolation layer surrounding the first isolation layer and having an inverted L-shaped cross-section; S1027, using a first thin-film deposition process to deposit a phase-change material onto a surface of the first isolation layer by physical vapor deposition, so as to form a phase-change material layer with a predetermined thickness in a window formed by the first isolation layer and the second isolation layer surrounding the first isolation layer, the predetermined thickness being less than or equal to a difference between the fourth thickness and the thickness of the first isolation layer; S1029, using a second thin-film deposition process to deposit an oxide layer of the same material as in step S1023 onto the phase-change material layer to cover the phase-change material layer, so as to obtain a first protective layer having a sixth thickness.

In some embodiments, the fourth thickness H4 is determined in advance by simulation.

In some embodiments, a length of the first isolation layer extending along a length direction of the optical waveguide is 1 µm-10 µm.

In some embodiments, a thickness of the phase-change material layer is 1 nm-1 µm.

In some embodiments, a length of the phase-change material layer extending along the length direction of the optical waveguide is 1 µm-10 µm.

In a sixth aspect, the present invention provides an optical waveguide prepared by the above-described method for preparing an optical waveguide, comprising: an optical waveguide layer, and a modulation layer located on the optical waveguide layer, wherein a first isolation layer is provided between the optical waveguide layer and the modulation layer, the modulation layer is covered with a first protective layer; a second isolation layer surrounding the first isolation layer and the modulation layer and having an inverted L-shaped cross-section, and a second protective layer surrounding the first protective layer, the second isolation layer, and the optical waveguide layer; wherein the modulation layer is enclosed in a sealed cavity defined by the first protective layer, the first isolation layer and the second isolation layer, and the modulation layer is or comprises a phase-change material layer; and wherein a thickness of the first isolation layer is less than the fourth thickness, and the fourth thickness is 1 nm-100 nm.

In some embodiments, the first isolation layer and the second isolation layer together define a second groove having an opening facing the first protective layer, and a height from a groove bottom of the second groove to a top opening thereof is greater than or equal to a thickness of the modulation layer.

In a seventh aspect, the present invention provides a method for preparing an optical waveguide, comprising the steps of: S1011, integrating an optical waveguide layer on a substrate to form an optical waveguide platform; S1013, forming, on an outer surface of the optical waveguide layer exposed above the substrate, a second stop layer having a fourth thickness and a second oxide layer having a second thickness by physical vapor deposition or chemical vapor deposition, wherein the second stop layer is located above the optical waveguide layer and has a width greater than a width of the optical waveguide layer, and the fourth thickness is 1 nm-100 nm; S1015, performing a windowing process on the second stop layer and the second oxide layer by regional etching, so that the second stop layer forms, on the optical waveguide layer, a first isolation layer having a thickness less than the fourth thickness, and a second isolation layer surrounding the first isolation layer; S1017, using a first thin-film deposition process to deposit a phase-change material onto a surface of the first isolation layer exposed in a window by physical vapor deposition, so as to form a phase-change material layer with a predetermined thickness, wherein a sum of the predetermined thickness and the thickness of the first isolation layer is greater than the fourth thickness; S1019, using a second thin-film deposition process to deposit an oxide layer of the same material as in step S1013 onto the phase-change material layer to cover the phase-change material layer, so as to obtain a first protective layer having a sixth thickness.

In some embodiments, a length of the first isolation layer extending along a length direction of the optical waveguide is 1 µm-10 µm.

In some embodiments, a thickness of the phase-change material layer is 1 nm-1 µm; and/or a length of the phase-change material layer extending along the length direction of the optical waveguide is 1 µm-10 µm.

In some embodiments, the phase-change material layer is made of a superlattice material.

In some embodiments, the phase-change material layer is formed of a chalcogenide compound containing antimony or selenium, or the phase-change material layer comprises a chalcogenide compound, wherein the chalcogenide compound includes at least one of Sb₂Se₃, SbSe, Sb₂S₃, SbS, and Ge₂Sb₂Se₄Te.

In some embodiments, the phase-change material comprises a compound, an alloy or a mixture thereof, wherein the compound or alloy contains one or more of germanium, antimony, selenium, and vanadium oxide; wherein the compound includes at least one of NbOx, GeTe, GeSb, GaSb, AgInSbTe, InSb, InSbTe, InSe, SbTe, TeGeSbS, AgSbSe, SbSe, GeSbMnSn, AgSbTe, AuSbTe, and AlSb.

In some embodiments, the second oxide layer is made of one or more of SiO₂, Al₂O₃, and ITO.

In some embodiments, the second stop layer is made of one or both of Si₃N₄ and TiN.

In an eighth aspect, the present invention provides an optical waveguide prepared by the above-described method for preparing an optical waveguide, comprising: an optical waveguide layer, and a modulation layer located on the optical waveguide layer, wherein a first isolation layer is provided between the optical waveguide layer and the modulation layer, the modulation layer is covered with a first protective layer; a second isolation layer surrounding the first isolation layer and a first region of the modulation layer adjacent to the first isolation layer, and a second protective layer surrounding the first protective layer, a second region of the modulation layer adjacent to the first protective layer, the second isolation layer, and the optical waveguide layer; wherein the modulation layer is enclosed in a sealed cavity defined by the first protective layer, the second protective layer, the first isolation layer and the second isolation layer, and the modulation layer is or comprises a phase-change material layer; and wherein a thickness of the first isolation layer is less than the fourth thickness, and the fourth thickness is 1 nm-100 nm.

In some embodiments, the first protective layer and the second protective layer together define a first groove having an inverted concave-shaped cross-section, wherein the second protective layer surrounds the first protective layer and the second region of the modulation layer; the first isolation layer and the second isolation layer together define a second groove having a concave-shaped cross-section, wherein the second isolation layer surrounds the first isolation layer and the first region of the modulation layer; and openings of the first groove and the second groove are arranged opposite to each other, so that the first groove and the second groove together define the sealed cavity having a rectangular cross-section.

In some embodiments, the first protective layer and the second protective layer together define a first groove having an inverted U-shaped cross-section, wherein the second protective layer surrounds the first protective layer and the second region of the modulation layer; the first isolation layer and the second isolation layer together define a second groove having a U-shaped cross-section, wherein the second isolation layer surrounds the first isolation layer and the first region of the modulation layer; and in the same cross-section, a distance between opposite sidewalls of the first groove gradually decreases in a direction approaching the optical waveguide layer, while a distance between opposite sidewalls of the second groove gradually increases in a direction away from the optical waveguide layer, and the opening of the first groove and the opening of the second groove are arranged opposite to each other, so that the sidewalls of the first groove and the sidewalls of the second groove are smoothly connected and together define the sealed cavity having a bowl-shaped or horn-shaped configuration.

**Beneficial Effects:** Currently, the primary method for fabricating integrated phase-change material-based optical devices on commercially available mature SOI substrates is to directly deposit various phase-change materials onto the upper surface of the optical waveguide layer (i.e., using an upward coupling approach) or onto both the upper surface and sidewalls of the waveguide (compared with the upward coupling approach, depositing the phase-change material layer on the sidewalls of the optical waveguide layer simultaneously may cause nonuniformity issues, leading to many uncertainties in subsequent optical coupling and phase-change material modulation processes). Sputtering of the phase-change material can be accomplished using a single target or multi-target co-sputtering (which allows adjustment of composition and doping). Magnetron sputtering is a technique in which energetic particles bombard the target surface in a vacuum, causing the sputtered particles to be deposited onto a substrate. After sputtering a phase-change material thin film on the surface using magnetron sputtering, an oxide layer is subsequently sputtered thereon for protection. Although this method enables heterogeneous integration of the phase-change material with the optical waveguide, it still suffers from the following two problems:

On the one hand, the stability of the structure itself remains to be improved. (1) The oxide layer sputtered after the phase-change material is very thin (10 nm-30 nm), and because it is sputtered immediately after the phase-change material and merely covers the upper surface of the phase-change material layer, it cannot completely encapsulate the phase-change material; naturally, its protective effect is relatively low. (2) After modulation (melting/recrystallization), the phase-change material, particularly after melting, exhibits fluidity and may migrate over a certain distance. Precisely because only a thin oxide layer covers its surface, it is actually unable to confine the variation region of the phase-change material after modulation, which may lead to material separation or even volatilization, thereby causing instability in the structural modulation layer when switching between the amorphous and crystalline states. On the other hand, it is difficult to achieve commercial implementation (e.g., industrial production) and can only be used for scientific research. This is because, in industrial production, a chip generally further comprises an oxide layer on the surface of the optical waveguide and a metal interconnect layer embedded in that oxide layer. Due to the limitations of existing front-end-of-line (FEOL) and back-end-of-line (BEOL) processes, the phase-change material cannot be directly incorporated into the chip manufacturing process; that is, the above-described method of directly sputtering a phase-change material layer onto the waveguide layer cannot be directly applied to industrial production. Specifically, existing chip manufacturing processes are mainly divided into FEOL and BEOL processes. The FEOL includes wafer fabrication, oxidation, photolithography, etching, deposition, and doping/ion implantation, while the BEOL mainly involves forming on-chip metal interconnect layers. Because the FEOL involves numerous technical challenges and complex operations, phase-change materials are not permitted to be integrated on the waveguide during the FEOL to avoid contamination. The dielectric layers and metallization in the BEOL require relatively high operating temperatures, and such high-temperature environments would affect the stability of the integrated phase-change material; therefore, phase-change materials are also not allowed to be placed before metallization. In other words, optical waveguides with such a structure are difficult to produce on an industrial scale.

On this basis, the present invention provides an optical waveguide with a novel structure, which has higher structural stability and facilitates commercial implementation. Specifically, in order to avoid damage to the optical waveguide layer during the window opening process, a first isolation layer is disposed between the optical waveguide layer and the modulation layer. Moreover, to better encapsulate the modulation layer, the modulation layer is arranged in a cavity defined by the first isolation layer and the second isolation layer, and is covered by the first protective layer. That is, the first isolation layer, the second isolation layer, and the first protective layer define the movement space of the modulation layer during switching between different states (for example, the first isolation layer and the second isolation layer form an encapsulation layer that almost completely encloses the modulation layer, and the first protective layer covers it to define the movement space of the modulation layer during switching between different states), thereby ensuring the integrity and stability of the modulation layer, reducing irreversible damage to the phase-change material, and prolonging the service life of the phase-change material.

### Brief Description of the Drawings

To more clearly illustrate the technical solutions in the embodiments of the present invention or in the prior art, the accompanying drawings required for use in the description of the embodiments or the prior art will be briefly introduced below. Throughout all the drawings, similar elements or parts are generally denoted by similar reference numerals. In the drawings, elements or parts are not necessarily drawn to actual scale. It is apparent that the drawings described below are some embodiments of the present invention, and those of ordinary skill in the art may obtain other drawings based on these drawings without making creative efforts.
Fig. 1a is a schematic cross-sectional structural view of an optical waveguide according to an exemplary embodiment of the present invention;
Fig. 1b is an exploded view of the optical waveguide shown in Fig. 1a;
Fig. 1c is a schematic cross-sectional structural view of an optical waveguide according to another exemplary embodiment of the present invention;
Fig. 1d is an exploded view of the optical waveguide shown in Fig. 1c;
Fig. 1e is a schematic cross-sectional structural view of an optical waveguide according to yet another exemplary embodiment of the present invention;
Fig. 1f is an exploded view of the optical waveguide shown in Fig. 1e;
Fig. 2a is a flowchart of a method for preparing an optical waveguide according to an exemplary embodiment of the present invention;
Fig. 2b is a flowchart of preparing the optical waveguide having the structure shown in Fig. 1a using the method for preparing an optical waveguide of the present invention;
Fig. 2c is a flowchart of preparing the optical waveguide having the structure shown in Fig. 1c using the method for preparing an optical waveguide of the present invention;
Fig. 3a to 3e are schematic views illustrating the preparation of an optical waveguide according to the method shown in Fig. 2, taking a strip waveguide layer as an example;
Fig. 3f to 3j are schematic views illustrating the preparation of an optical waveguide according to the method shown in Fig. 2, taking a strip waveguide layer as an example;
Fig. 4 is an optical power graph of cyclic modulation of an optical waveguide prepared by a conventional phase-change material integration method (i.e., a control group);
Fig. 5 is an optical power graph of cyclic modulation of an optical waveguide obtained by the method shown in Fig. 3a to 3e (i.e., an experimental group).

Summary of reference numerals: 01 substrate; 02 optical waveguide layer; 03 phase-change material layer: 031 second region, 032 first region; 04 first isolation layer; 05 first protective layer; 06 second isolation layer; 07 second protective layer; 5 metal interconnect layer; 001 sealed cavity, 0011 first groove, 0012 second groove; H0: height of the phase-change material layer extending in the Z-axis direction (or referred to as predetermined thickness); H1, H3: height of the second stop layer extending in the Z-axis direction in different embodiments (or referred to as first thickness, third thickness); H2: height of the second oxide layer extending in the Z-axis direction in different embodiments (or referred to as second thickness); H4: height of the first stop layer (or first isolation layer) extending in the Z-axis direction (or referred to as fourth thickness); H6: height of the first oxide layer extending in the Z-axis direction (or referred to as sixth thickness); h1: height of the opening of the first groove; h2: height of the opening of the second groove (h2 > h1).

### DETAILED DESCRIPTION

In order to make the objectives, technical solutions, and advantages of the embodiments of the present invention clearer, the technical solutions in the embodiments of the present invention will be clearly and completely described below with reference to the accompanying drawings in the embodiments of the present invention. Obviously, the described embodiments are some, but not all, of the embodiments of the present invention. Based on the embodiments of the present invention, all other embodiments obtained by those of ordinary skill in the art without making creative efforts shall fall within the protection scope of the present invention. In this document, suffixes used to denote elements such as "module," "component," or "unit" are merely for facilitating the description of the present invention and have no specific meaning per se. Therefore, "module," "component," or "unit" may be used interchangeably. In this document, terms such as "upper," "lower," "inner," "outer," "front," "rear," "one end," and "the other end" indicating orientations or positional relationships are based on the orientations or positional relationships shown in the accompanying drawings, and are merely for convenience in describing the present invention and simplifying the description, rather than indicating or implying that the device or element referred to must have a particular orientation, be constructed and operate in a particular orientation, and therefore should not be construed as limiting the present invention. In addition, the terms "first" and "second" are used for descriptive purposes only and should not be construed as indicating or implying relative importance. In this document, unless otherwise expressly specified and limited, the terms "mounted," "provided with," "connected," and the like should be understood in a broad sense. For example, "connected" may be a fixed connection, a detachable connection, or an integral connection; it may be a mechanical connection, a direct connection, or an indirect connection via an intermediate medium, or it may be an internal communication between two elements. Those of ordinary skill in the art may understand the specific meanings of the above terms in the present invention in specific contexts. In this document, "and/or" includes any and all combinations of one or more of the associated listed items. In this document, "plurality" means two or more, i.e., including two, three, four, five, and so on. As used in this specification, the term "approximately" is typically expressed as +/-5% of the stated value, more typically +/-4% of the stated value, more typically +/-3% of the stated value, more typically +/-2% of the stated value, even more typically +/-1% of the stated value, and even more typically +/-0.5% of the stated value. In this specification, certain embodiments may be disclosed in a range format. It should be understood that such "range format" description is merely for convenience and brevity and should not be construed as an inflexible limitation on the disclosed scope. Accordingly, the description of a range should be considered to have specifically disclosed all possible sub-ranges and individual numerical values within that range. For example, the description of the range 1-6 should be considered to have specifically disclosed sub-ranges such as 1 to 3, 1 to 4, 1 to 5, 2 to 4, 2 to 6, 3 to 6, and so forth, as well as individual numbers within that range, such as 1, 2, 3, 4, 5, and 6. The above rules apply regardless of the breadth of the range.

In this document, "light" refers to electromagnetic radiation or electromagnetic waves having wavelengths ranging from ultraviolet (UV) to infrared (IR), for example, between 10 nm and 100 µm, which can propagate in free space and be guided by a waveguide. In this document, "stable state" means substantially stable under standard temperature and pressure conditions as defined by the National Institute of Standards and Technology (NIST). In this document, "optical waveguide layer" refers to any structure that confines light in one or more dimensions within or adjacent to a surface thereof, so as to guide light in a propagation direction parallel to its axis. A waveguide is formed by a series of layers/regions having different refractive indices, typically including an inner layer/region or core layer/region. The inner layer/region or core layer/region is made of a material having a higher refractive index than the surrounding (outer) layers/regions or cladding layers/regions. In this case, the waveguide confines light in two dimensions, i.e., in the thickness/growth direction and in the transverse/width direction perpendicular to the thickness/growth direction, for example, within a channel. The core layer/region and/or the cladding layer/region may be referred to as a guiding layer that actively confines and guides light. In this document, "modulation layer" refers to any entity that has an effect on optical properties, including transmission, refraction, absorption, and the like. In some embodiments, the optical modulation layer includes a phase-change material layer made of a phase-change material, or may be made of a phase-change material.

The present invention provides an optical waveguide having high stability and enabling industrial production, comprising: an optical waveguide layer, and a modulation layer located on the optical waveguide layer, wherein a first isolation layer is disposed between the optical waveguide layer and the modulation layer for preventing the optical waveguide layer from being damaged during the window opening process, and the modulation layer is covered with a first protective layer. The modulation layer is made of a phase-change material, or comprises a phase-change material layer (for ease of description, in the following embodiments, the phase-change material layer is taken as an example of the modulation layer). In the window opening step of current industrial production, it is difficult to directly open a window perfectly above the optical waveguide layer, i.e., to directly sputter or deposit the modulation layer on the optical waveguide layer without any loss of the waveguide layer during the window opening process. Therefore, in each example herein, an isolation layer (e.g., a first stop layer) is provided on the optical waveguide layer to protect the optical waveguide layer while encapsulating the modulation layer. For example, by pre-disposing a first stop layer having a specified thickness and a first oxide layer (e.g., a first stop layer having a first thickness H1 or a third thickness H3, and a first oxide layer having a second thickness H2) on the optical waveguide layer, and then during the window opening process, controlling the process parameters of the window opening process to control the etching depth into the first stop layer, such that a first stop layer having a specified thickness (e.g., a fourth thickness H4) is retained on the optical waveguide layer to obtain a first isolation layer, thereby avoiding damage to the optical waveguide while encapsulating the modulation layer to ensure its stability.

Generally, in an upward coupling configuration, the modulation layer is disposed directly on the upper surface of the optical waveguide layer, so that the modulation layer has an optimal coverage range over the evanescent field of the light in the optical waveguide, thereby enabling an optimal optical signal power range for modulation. However, as mentioned above, due to limitations of existing processes, it is difficult to directly dispose the modulation layer perfectly on the optical waveguide layer without damaging it. Therefore, in order to avoid damage to the optical waveguide layer, an isolation layer is provided on the optical waveguide layer for protection. However, at the same time, the influence of the isolation layer on the evanescent field of the light in the optical waveguide by the modulation layer must be considered. If the isolation layer is too thick, the range of the evanescent field that can be affected by the modulation layer (even with the same state and thickness) becomes smaller, thereby reducing the optical signal power range that can be modulated. If the isolation layer is too thin, it is difficult to achieve such thinness due to the limitations of existing window opening processes. Therefore, by comprehensively considering the influence of the modulation layer on the evanescent field of the light in the optical waveguide and the protection of the optical waveguide layer, the thickness of the isolation layer is explored so as to protect the optical waveguide layer without significantly reducing the coverage range of the modulation layer over the evanescent field of the light in the optical waveguide layer. For example, the specific thickness is determined by simulation according to actual requirements. Preferably, the thickness H4 of the isolation layer between the optical waveguide layer and the modulation layer is 1 nm-100 nm.

Of course, it is also possible to pre-dispose an isolation layer having a desired thickness, e.g., a thickness of H4, directly on the optical waveguide layer in advance. Then, during the subsequent window opening process, the oxide layer is directly etched away, i.e., the etching is stopped as soon as the isolation layer is observed during the etching process. Since the isolation layer has a certain thickness, even if a small amount is etched away, it will not affect the optical waveguide; instead, it reduces the thickness of the isolation layer, which is beneficial to the influence of the modulation layer on the evanescent field of the light in the optical waveguide layer. In particular, when limited by current window opening processes, it is not possible to make the thickness of the stop layer between the modulation layer and the optical waveguide layer thinner (e.g., less than 1 nm) directly through etching parameters. By pre-depositing the isolation layer to a specified thickness (e.g., the minimum value of the range: 1 nm), a slight over-etching occurs during the etching of the originally provided oxide layer, which can further reduce the thickness of the isolation layer. For ease of describing the positional relationships among the components of the optical waveguide, a three-dimensional coordinate system is established herein with the length of the optical waveguide as the Y-axis, the height as the Z-axis, and the width as the X-axis, wherein the cross-section refers to a section obtained by cutting the corresponding region of the optical waveguide with a vertical plane (i.e., the XZ plane).

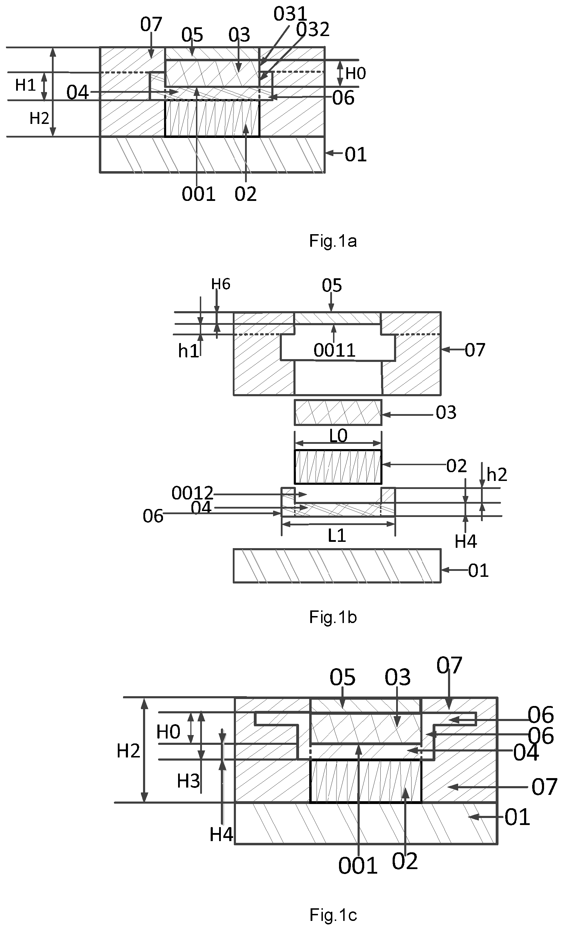

Example 1: Referring to Fig. 1a, which is a schematic structural view of an optical waveguide according to an exemplary embodiment of the present invention. Specifically, the optical waveguide structure comprises: a silicon oxide substrate 01; an optical waveguide layer 02; and a phase-change material layer 03 located on the optical waveguide layer 02, wherein a first isolation layer 04 is disposed between the optical waveguide layer 02 and the phase-change material layer 03 (i.e., the modulation layer), and the phase-change material layer 03 is covered with a first protective layer 05. Preferably, the width of the first isolation layer 04 (i.e., the length extending along the X-axis direction), the width of the optical waveguide layer 02 (i.e., the length extending along the X-axis direction), and the width of the phase-change material layer 03 (i.e., the length extending along the X-axis direction) are the same.

Referring to Fig. 1a, on the substrate 01, a second isolation layer 06 is provided surrounding the first isolation layer 04 and a first region 032 of the phase-change material layer 03 adjacent to the first isolation layer 04 (i.e., a portion of the sidewall region around the bottom of the phase-change material layer 03 in contact with the first isolation layer 04). The first thickness (i.e., the length extending along the Z-axis direction) H1 of the second isolation layer 06 is greater than the fourth thickness H4 of the first isolation layer 04, but less than the sum of the thicknesses of the phase-change material layer 03 and the first isolation layer 04 (i.e., the sum of H0 and H4), such that the first isolation layer 04 and the second isolation layer 06 together define an upwardly encapsulating encapsulation layer (i.e., the surrounding edges of the encapsulating member extend upward from the bottom of the encapsulated member along the height direction of its surrounding sidewalls to form surrounding sidewalls) for the first region 032 of the phase-change material layer 03 adjacent to the optical waveguide layer 02. A second protective layer 07 is provided surrounding the first protective layer 05, a second region 031 of the phase-change material layer 03 adjacent to the first protective layer 05 (i.e., a portion of the sidewall region around the top of the phase-change material layer 03 in contact with the first protective layer 05), the second isolation layer 06, and the optical waveguide layer 02, such that the first protective layer 05 and the second protective layer 07 corresponding to the second region together define a downwardly encapsulating encapsulation layer (i.e., the surrounding edges of the encapsulating member extend downward from the top of the encapsulated member along the height direction of its surrounding sidewalls to form surrounding sidewalls) for the second region 031 of the phase-change material layer 03 away from the optical waveguide layer 02. That is, the phase-change material layer 03 is enclosed in a sealed cavity 001 defined by the first protective layer 05, the second protective layer 07, the first isolation layer 04, and the second isolation layer 06.

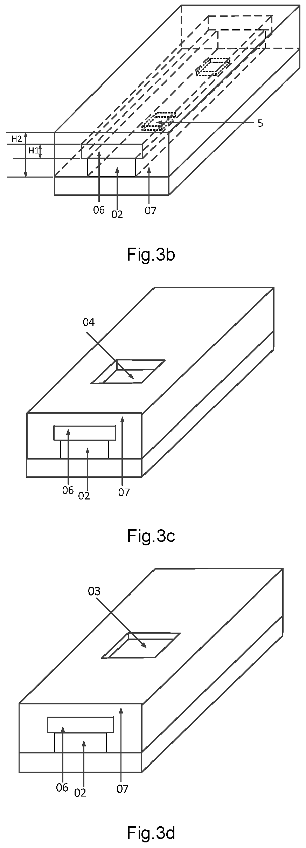

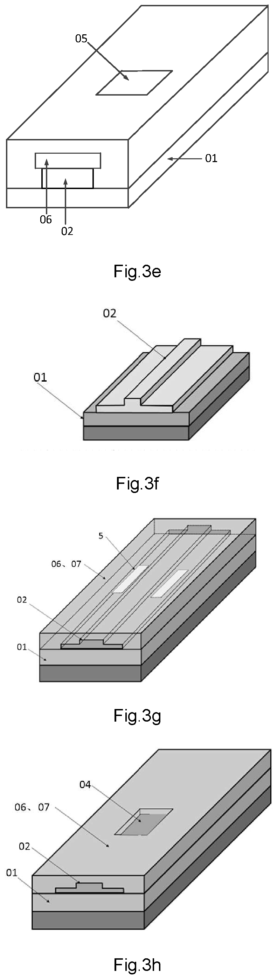

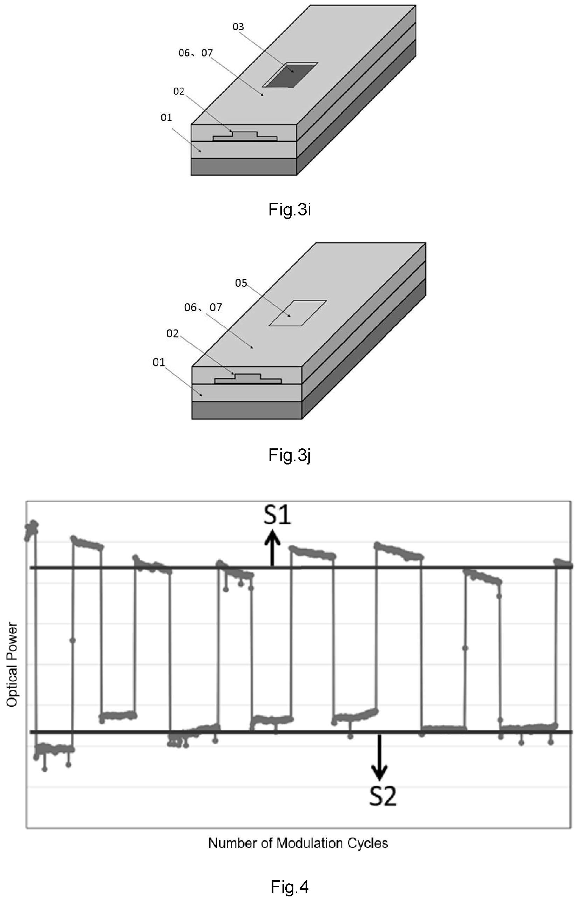

In some embodiments, a stop layer (e.g., a second stop layer having a first thickness H1 and a first width L1, where L1 is greater than the width L0 of the optical waveguide layer 02) and an oxide layer (e.g., a second oxide layer having a second thickness H2) may be pre-disposed on the optical waveguide layer 02 (see Fig. 3b and 3g). In order to dispose the phase-change material layer 03 on the optical waveguide layer 02, a localized etching method may be used to etch the oxide layer and the stop layer pre-covered on the optical waveguide layer 02 to form a cavity with a top opening (or referred to as an opened window), thereby preparing for the subsequent encapsulation of the phase-change material layer 03. For example, a localized etching method is used for window opening, and a stop layer having a fourth thickness H4 is retained directly above the optical waveguide layer 02, so that a first stop layer is formed between the bottom of the cavity or window and the optical waveguide layer 02. At the same time, a second stop layer having a first thickness H1 remains around the first stop layer. That is, after the phase-change material is subsequently sputtered or deposited in the cavity or window, the first stop layer becomes the first isolation layer 04 between the phase-change material layer 03 and the optical waveguide layer 02. Specifically, by setting the etching parameters of the localized etching method, a stop layer having a fourth thickness H4 (e.g., 1 nm-100 nm) is retained on the optical waveguide layer 02 to obtain the first isolation layer 04, thereby avoiding damage to the optical waveguide layer 02 during the etching process or the window opening process (see Fig. 1b, Fig. 3c and 3h). In another example, as mentioned above, during the preparation of the optical waveguide, an isolation layer having a predetermined desired thickness, e.g., a fourth thickness H4, may also be pre-disposed directly on the optical waveguide layer 02 in advance. Therefore, when the localized etching method is used for window opening, a stop layer having a thickness less than the fourth thickness H4 is retained directly above the optical waveguide layer 02, so that a first stop layer is formed between the bottom of the cavity or window and the optical waveguide layer 02. At the same time, a second stop layer having a fourth thickness H4 remains around the first stop layer. That is, after the phase-change material is subsequently sputtered or deposited in the cavity or window, the first stop layer becomes the first isolation layer 04 between the phase-change material layer 03 and the optical waveguide layer 02. Specifically, by setting the etching parameters of the localized etching method, a stop layer having a thickness less than the fourth thickness H4 (e.g., 1 nm-100 nm) is retained on the optical waveguide layer 02 to obtain the first isolation layer 04, thereby avoiding damage to the optical waveguide layer 02 during the etching process or the window opening process (see Fig. 1b, Fig. 3c and 3h). That is to say, in other embodiments, in the optical waveguide structure having the above-described sealed cavity 001, the thickness of the first isolation layer 04 between the phase-change material layer 03 and the optical waveguide layer 02 is less than the fourth thickness H4.

In some embodiments, after the above-described cavity is formed in the oxide layer and the stop layer by a localized etching method, a phase-change material layer 03 having a specified thickness H0 (e.g., 1 nm-1 µm) may be disposed on the first isolation layer 04 by sputtering or deposition processes (physical vapor deposition or chemical vapor deposition), thereby obtaining the modulation layer. Of course, in order to protect the modulation layer, it is also necessary to cover a first protective layer 05 having a sixth thickness H6, e.g., a first oxide layer, thereover. In order to ensure stability and avoid the situation where the first oxide layer covering the phase-change material layer 03 is too thin to confine the variation region of the phase-change material after modulation, preferably, the sixth thickness H6 of the first oxide layer is 0.1 µm-3 µm. More preferably, the first oxide layer is deposited on the phase-change material layer by physical vapor deposition (PVD) or chemical vapor deposition (CVD).

Since the first isolation layer 04 is obtained by localized etching on the original oxide layer and stop layer, and the phase-change material is sputtered or deposited on the first isolation layer 04, after the first protective layer 05 having a sixth thickness H6 is further covered on the phase-change material layer, the first protective layer 05 (i.e., the first oxide layer newly covered on the phase-change material layer 03) and the second protective layer 07 surrounding the first protective layer 05 (i.e., the portion of the original oxide layer retained after etching, such as the original second oxide layer) together define a first groove 0011 having an opening facing the phase-change material layer 03. Meanwhile, the first isolation layer 04 and the second isolation layer 06 surrounding the first isolation layer 04 (i.e., the portion of the original stop layer retained after etching) together define a second groove 0012 having an opening facing the phase-change material layer 03. The opening of the first groove 0011 and the opening of the second groove 0012 are disposed opposite to each other, such that the first groove 0011 and the second groove 0012 together define the above-described sealed cavity 001 (i.e., the sum of the opening height h1 of the first groove 0011 and the opening height h2 of the second groove 0012 is the height of the sealed cavity 001, which is equal to or slightly greater than the thickness H0 of the phase-change material layer). Preferably, the cross-sections of both the first groove 0011 and the second groove 0012 are rectangular, i.e., the cross-section of the sealed cavity 001 is rectangular. In some embodiments, the upper surface of the first protective layer 05 is flush with the upper surface of the second protective layer 07. Of course, in other embodiments, the upper surface of the first protective layer 05 is not flush with the upper surface of the second protective layer 07; alternatively, the first protective layer 05 covers a portion (preferably, the portion of the second oxide layer around the top opening of the cavity) or the entire upper surface of the second protective layer 07. In some embodiments, the optical waveguide layer is of a strip type (i.e., having a rectangular cross-section). Of course, the optical waveguide layer may also be of a ridge type (i.e., having a convex-shaped cross-section). In some embodiments, the above-mentioned substrate may also be an SOI substrate, as long as the substrate enables the optical waveguide layer to have an optical bandgap of at least 1 eV.

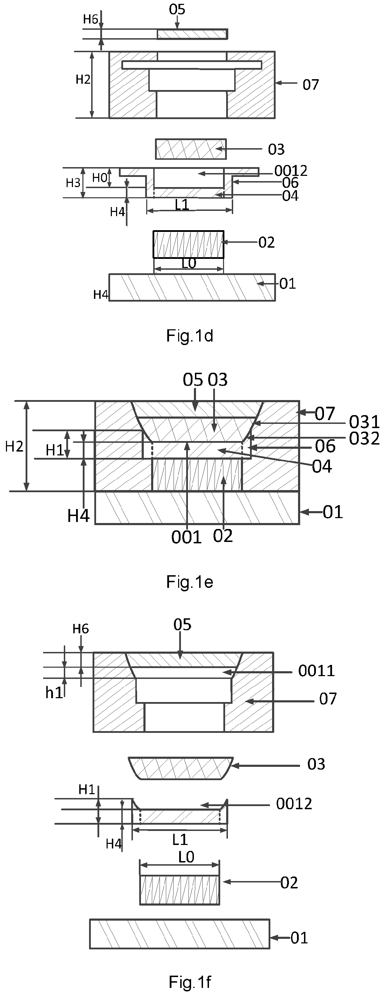

Example 2: order to better protect and encapsulate the phase-change material layer 03 while also reducing process difficulty, the present invention further provides an optical waveguide having another exemplary structure, comprising each of the components of Example 1 above, with the difference that in the optical waveguide of this exemplary embodiment, the sealed cavity 001 is defined solely by the first oxide layer (i.e., the first protective layer 05) located on top of the phase-change material layer 03, the first isolation layer 04 (i.e., the first stop layer) located at the bottom of the phase-change material layer 03 (i.e., the modulation layer), and the second isolation layer 06 (i.e., the second stop layer) surrounding the phase-change material layer 03 and the first isolation layer 04 (see Fig. 1c and 1d). The second protective layer 07 surrounds the first protective layer 05, the second isolation layer 06, and the optical waveguide layer 02, forming an almost fully encapsulating protection.

In some embodiments, the second isolation layer 06 surrounding the phase-change material layer 03 and the first isolation layer 04 has an inverted L-shaped cross-section, and the upper surface of the second isolation layer 06 is flush with or slightly higher than the upper surface of the phase-change material layer 03.

In some embodiments, when preparing the optical waveguide of this exemplary structure, a second oxide layer having a second thickness H2 and a second stop layer having a third thickness H3 may be pre-disposed on and around the optical waveguide layer 02, wherein the top of the second stop layer extends laterally along the width direction of the optical waveguide, such that the second stop layer has a T-shaped cross-section, and a first width L1 of a vertical portion thereof extending along the Z-axis direction is greater than the width L0 of the optical waveguide layer 02. Then, the second oxide layer and the second stop layer are etched by a localized etching method to form a cavity having a top opening. Specifically, by setting the etching parameters of the localized etching method, a cavity for accommodating the phase-change material layer 03 is formed, i.e., a second groove 0012 formed in the second stop layer (with the first isolation layer 04 serving as the bottom of the second groove 0012 and the second isolation layer 06 serving as the sidewalls of the second groove 0012) serves as the cavity for accommodating the phase-change material layer 03, and the height h2 from the bottom of the groove to the top opening thereof is equal to or slightly greater than the predetermined thickness H0 of the sealed cavity/modulation layer, such that the periphery and the bottom of the modulation layer are both encapsulated by the second stop layer, thereby providing the prepared optical waveguide with higher stability and reducing process difficulty.

In other embodiments, the second stop layer pre-disposed on and around the optical waveguide layer 02 has a concave-shaped cross-section. Specifically, the concave shape includes a regular symmetrical rectangular recess geometry, or an irregular modified recess geometry having a similar contour to the foregoing regular rectangular recess structure. (e.g., its two sidewalls have a certain inclination, or the width of the sidewalls varies along the Z-axis direction, or the top edges of the two sidewalls extend along the width direction of the optical waveguide to form protruding edges of a certain width). Correspondingly, the third thickness H3 refers to the height from the top to the bottom of the sidewalls of the second stop layer having a concave-shaped cross-section; and the thickness of the bottom of the groove is greater than or equal to the fourth thickness H4.

As mentioned above, during the preparation of the optical waveguide, an isolation layer having a predetermined desired thickness, i.e., a fourth thickness H4, may also be pre-disposed directly on the optical waveguide layer 02. For example, a second stop layer having a fourth thickness H4 is deposited on the optical waveguide layer 02, rather than disposing a second stop layer having a third thickness H3. Moreover, during the window opening process, the oxide layer and the second oxide layer may be over-etched, such that a second stop layer having a thickness less than the fourth thickness H4 remains on the optical waveguide layer 02, i.e., obtaining a first isolation layer 04 having a thickness less than the fourth thickness H4. That is to say, in other embodiments, when the optical waveguide having the above structure is prepared, the thickness of the first isolation layer 04 between the phase-change material layer 03 and the optical waveguide layer 02 is less than the fourth thickness H4.

Example 3: the optical waveguide having the above structure, the window opening process imposes relatively strict requirements on the window size. Moreover, since the sidewalls of the etched cavity all extend in a vertical direction (or are slightly inclined), during sputtering of the phase-change material, deposition may occur on other surrounding positions, requiring additional removal of the phase-change material from these portions, or alternatively, covering the phase-change material deposited on the surrounding positions with the same first protective layer. This not only increases the difficulty of the window opening process, but also makes the operation more complicated. On this basis, the present invention further provides an optical waveguide having yet another exemplary structure, comprising each of the components of Example 1 above, with the difference that in this example, the phase-change material layer 03 is enclosed in a sealed cavity 001 having a horn-shaped or bowl-shaped cross-section defined by the first protective layer 05, the second protective layer 07, the first isolation layer 04, and the second isolation layer 06.

In some embodiments, referring to Fig. 1e and 1f, the first protective layer 05 and the second protective layer 07 surrounding the first protective layer 05 and the second region of the phase-change material layer 03 away from the optical waveguide layer 02 together define a first groove 0011 having an inverted U-shaped cross-section; the first isolation layer 04 and the second isolation layer 06 surrounding the first isolation layer 04 and the first region of the phase-change material layer 03 adjacent to the optical waveguide layer 02 together define a second groove 0012 having a U-shaped cross-section. In the same cross-section, a distance between oppositely disposed sidewalls of the first groove 0011 gradually decreases in a direction approaching the optical waveguide layer 02 (or in a downward vertical direction), while a distance between oppositely disposed sidewalls of the second groove 0012 gradually increases in a direction away from the optical waveguide layer 02 (or in an upward vertical direction). The opening of the first groove 0011 and the opening of the second groove 0012 are disposed opposite to each other, such that the sidewalls of the first groove 0011 and the sidewalls of the second groove 0012 are smoothly connected and together define the sealed cavity 001.

In some embodiments, as described above, a stop layer and an oxide layer may be pre-disposed on the optical waveguide layer 02, and then a localized etching method is used to etch the bowl-shaped or horn-shaped cavity having a top opening. On the one hand, because the top opening of the cavity is relatively large, i.e., the coverage area for subsequent sputtering of the phase-change material is enlarged, the inclined window sidewalls also make it easier for the phase-change material to enter the window and deposit on the bottom of the window, thereby reducing the difficulty of the sputtering process. On the other hand, because the top opening is relatively large and the surrounding sidewalls have a certain inclination or curvature, i.e., non-vertical etching, the etching process is less difficult compared with that of the optical waveguide structures in Example 1 or Example 2.

As mentioned above, during the preparation of the optical waveguide, an isolation layer having a predetermined desired thickness, e.g., a fourth thickness H4, may also be pre-disposed directly on the optical waveguide layer 02. For example, a second stop layer having a fourth thickness H4 is deposited on the optical waveguide layer 02, and then during the window opening process, the oxide layer and the second stop layer are over-etched, such that a second stop layer having a thickness less than H4 remains on the optical waveguide layer 02, i.e., obtaining a first isolation layer 04 having a thickness less than the fourth thickness H4. That is to say, in other embodiments, in the optical waveguide structure having the sealed cavity 001 with a horn-shaped or bowl-shaped cross-section, the thickness of the first isolation layer 04 between the phase-change material layer 03 and the optical waveguide layer 02 is less than the fourth thickness H4.

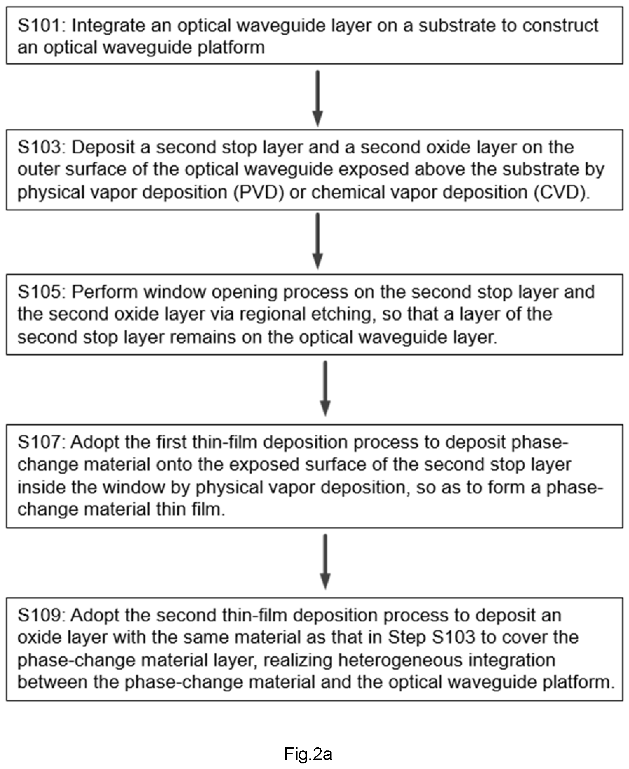

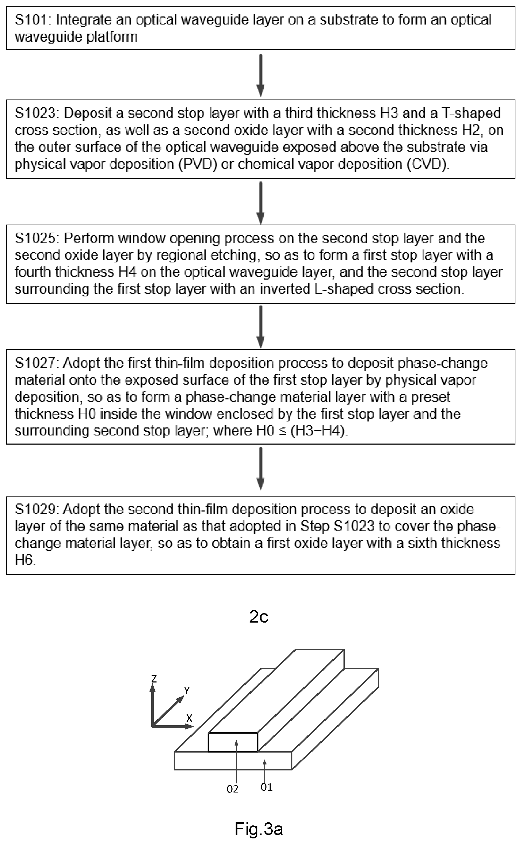

Example 4: method for preparing the optical waveguide. Referring to Fig. 2a, which is a flowchart of a method for preparing an optical waveguide according to an exemplary embodiment of the present invention. Specifically, the method comprises the step of: S101, integrating an optical waveguide layer 02 on a substrate to form an optical waveguide platform. In some embodiments, step S101 is performed using a conventional pulsed laser deposition (PLD) technique, for example, the process disclosed in Chinese Patent No. CN1487636A, which will not be described in detail herein. Referring to Fig. 3a, taking a strip waveguide as an example, an optical waveguide layer 02 is integrated on a substrate 01 to form an optical chip having an optical waveguide platform. In some embodiments, the substrate is a silicon nitride substrate or an SOI substrate; and the optical waveguide layer 02 has an optical bandgap of at least 1 eV. Preferably, the material of the optical waveguide layer 02 is selected from: silicon, silicon nitride, gallium nitride, gallium arsenide, aluminum nitride, magnesium oxide, and diamond (polycrystalline or single crystal).

S103, forming a second stop layer and a second oxide layer on the outer surface of the optical waveguide layer 02 exposed above the substrate by physical vapor deposition or chemical vapor deposition, wherein the second stop layer is located above the optical waveguide layer 02 and has a width greater than that of the optical waveguide layer 02. In some embodiments, the second stop layer and a thicker second oxide layer are sequentially covered on the outer surface of the optical waveguide layer 02 exposed above the substrate. The function of the second stop layer is to provide an isolation layer above the optical waveguide layer 02 for isolating the dry etching process of the oxide layer. During dry etching of the oxide layer, the etching reaction stops upon reaching the second stop layer, thereby achieving etching of the second oxide layer without affecting the optical waveguide layer itself; at the same time, it also forms an encapsulation around the modulation layer, improving the stability of the modulation layer when switching between the amorphous and crystalline states. The thicker second oxide layer serves to protect the waveguide and the metal interconnect layers, while also providing electrical insulation between silicon and metal interconnect layers and between metal interconnect layers. In some embodiments, the material of the second oxide layer is one of SiO₂, Al₂O₃, or ITO. Preferably, the material of the second oxide layer is SiO₂. The material of the second stop layer is one or more of Si₃N₄ and Ti. Preferably, the material of the second stop layer is Si₃N₄. In some embodiments, both the second stop layer and the second oxide layer are formed by basic film deposition processes, including various methods such as vacuum evaporation, ion beam sputtering, magnetron sputtering, chemical vapor deposition (CVD), etc. The specific process parameters of such film deposition processes vary among different silicon photonics foundries and are common in the prior art, and will not be described in detail herein. It should be noted that during the deposition of the second oxide layer, conventional physical vapor deposition physical vapor deposition (PVD) or chemical vapor deposition (CVD) processes are used, and the metal interconnect layers 5 are simultaneously deposited and embedded therein, with the metal interconnect layers 5 connected to the optical waveguide layer 02 through vias.

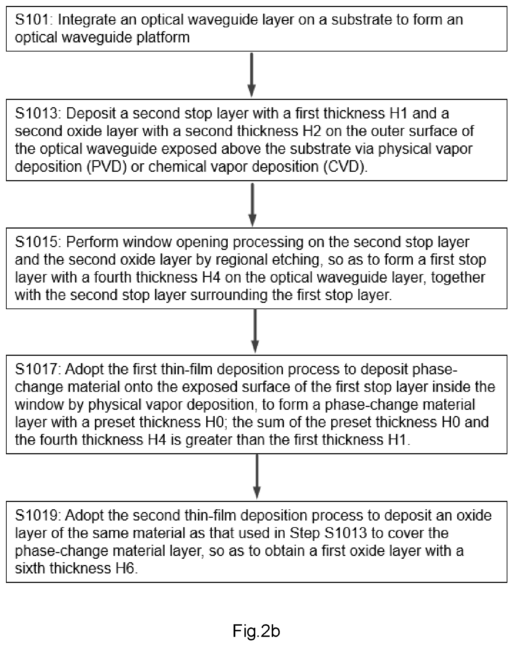

Referring to Fig. 2b and 3b, taking a strip waveguide as an example, a second stop layer having a first thickness H1 and a second oxide layer having a second thickness H2 are sequentially covered on the outer surface of the optical waveguide layer 02 exposed above the substrate 01 (i.e., S1013). In order to encapsulate the phase-change material layer 03 (e.g., partial encapsulation or nearly full encapsulation), the width of the second stop layer is greater than the width of the optical waveguide layer 02, so that a groove can be formed in the second stop layer during the subsequent window opening process. The bottom of the groove between the phase-change material layer 03 and the optical waveguide layer 02 serves as the first isolation layer 04, and the groove walls surrounding the first isolation layer 04 serve as the second isolation layer 06.

Referring to Fig. 2c, in other embodiments, in order to ensure that the phase-change material layer 03 is almost fully encapsulated by the second stop layer, e.g., the upper surface of the phase-change material layer 03 is substantially flush with the upper surface of the second stop layer, so that the second stop layer remains around the periphery of the phase-change material layer 03, the second oxide layer and a second stop layer having a T-shaped cross-section may be first covered on the outer surface of the optical waveguide layer 02 exposed above the substrate 01 (i.e., S1023). In the T-shape, the width L1 of the vertical portion is greater than the width L0 of the optical waveguide layer 02, so as to ensure that during the subsequent etching process, when etching reaches the second stop layer, portions of the second stop layer are retained around the periphery and at the bottom of the phase-change material layer 03, wherein the portion between the optical waveguide layer 02 and the phase-change material layer 03 serves as the first isolation layer 04 (having a thickness H4). Of course, in other embodiments, the second oxide layer and a second stop layer having a concave-shaped cross-section may also be first covered on the outer surface of the optical waveguide layer 02 exposed above the substrate 01, and the width of the concave shape is greater than the width of the optical waveguide layer 02, so as to ensure that during the subsequent etching process, when etching reaches the second stop layer, portions of the second stop layer are retained around the periphery and at the bottom of the phase-change material layer 03, wherein the portion between the optical waveguide layer 02 and the phase-change material layer 03 serves as the first isolation layer 04 (having a thickness H4).

As described above, a first isolation layer 04 having a predetermined desired thickness, i.e., a fourth thickness H4, may be pre-disposed directly on the optical waveguide layer 02 in advance. Therefore, in other embodiments, in step S103, a second stop layer having a fourth thickness H4 (i.e., 1 nm-100 nm) and a second oxide layer having a second thickness H2 may also be sequentially covered on the outer surface of the optical waveguide layer 02 exposed above the substrate 01. Then, a groove may be formed in the second stop layer through a window opening process, wherein the bottom of the groove between the phase-change material layer 03 and the optical waveguide layer 02 serves as the first isolation layer 04, and the groove walls surrounding the first isolation layer 04 serve as the second isolation layer 06.

S105, performing a window opening process on the second stop layer and the second oxide layer by a localized etching method, so that a layer of the second stop layer remains on the optical waveguide layer 02. In some embodiments, a localized etching method is used for the window opening process on the second stop layer and the second oxide layer, exposing a portion of the second stop layer covered on the optical waveguide layer 02. Conventional localized etching window opening processes currently include a combination of dry etching and wet etching, or dry etching followed by dry etching. When dry etching is used, the second oxide layer in the window opening portion is etched until the second stop layer is reached; the second stop layer in the window opening portion is then etched by dry etching or wet etching to a position above the optical waveguide layer. The specific parameters vary among different silicon photonics foundries, but mainly depend on the oxide layer process, stop layer process, dry etching process, and wet etching process, which are also common in the prior art and will not be described in detail herein. In some embodiments, in S105, it should be noted that the localized etching window opening process must avoid the metal interconnect layers 5 and vias, i.e., the metal interconnect layers 5 and vias must not be exposed in the window, and there must be a certain distance between the metal interconnect layers and vias and the etched region of the window opening process, the specific distance being determined by the process capability of each silicon photonics foundry. As described above, due to limitations of etching processes in current industrial production, it is difficult to directly open a window perfectly above the optical waveguide layer 02, i.e., without any damage to the optical waveguide layer 02 and without leaving excess stop layer and/or oxide layer on the optical waveguide layer 02. Therefore, in the present method, in step S103, a second stop layer having a first thickness H1 or a third thickness H3, and a second oxide layer having a second thickness H2 are pre-disposed on the optical waveguide layer 02. Then, a window opening process is performed on the second oxide layer and the second stop layer by localized etching, and a second stop layer having a fourth thickness H4 is retained on the optical waveguide layer 02, i.e., in the window opening region, the second stop layer on the optical waveguide layer 02 is not completely etched away, but a groove is etched into the second stop layer (see S1015 in Fig. 2b or S1025 in Fig. 2c).

On the other hand, as described above, considering the influence of the stop layer on the coverage range of the phase-change material layer 03 over the evanescent field of the light in the optical waveguide layer 02, preferably, the fourth thickness H4 of the formed first isolation layer 04 is 1 nm-100 nm.

As described above, since a second stop layer having a predetermined specified thickness, i.e., the fourth thickness H4, is pre-deposited on the optical waveguide layer 02, during the window opening process, the second oxide layer may be directly etched away, and the etching may be stopped as soon as the second stop layer is observed during the etching process, thereby leaving a second stop layer having a fourth thickness H4, i.e., the first isolation layer 04, on the optical waveguide layer 02. Of course, over-etching may also be performed, in which case a second stop layer having a thickness less than the fourth thickness H4, i.e., the first isolation layer 04 having a thickness less than the fourth thickness H4, remains on the optical waveguide layer 02.

In some embodiments, the area of the exposed second stop layer (i.e., the area of the first isolation layer 04) in the window opening process is determined by the area of the phase-change material to be deposited. Preferably, the area of the exposed second stop layer is the same as the area of the phase-change material layer 03.

Referring to Fig. 3c, taking a strip waveguide as an example, a window opening process is performed on the second stop layer and the second oxide layer by a localized etching method, exposing a portion of the second stop layer having a fourth thickness H4 (H4 < H1) covered on the optical waveguide layer 02, i.e., the first isolation layer 04; and the area of the first isolation layer 04 is the same as the area of the phase-change material layer 03 to be subsequently provided.

To ensure that the area of the exposed portion of the second stop layer, i.e., the first isolation layer 04, is the same as or not significantly different from the area of the phase-change material layer 03, the control parameters of the etching process must be very precise, i.e., the processing difficulty is relatively high, and the subsequent sputtering process also requires high precision. In view of this, when etching in step S105 or S1015, the window opening is not performed according to the above 1:1 (or close to 1:1) area ratio; instead, a bowl-shaped or horn-shaped cavity (or window) is etched, and the phase-change material is then sputtered therein. Finally, a first oxide layer having a sixth thickness H6 is deposited to obtain the first protective layer 05, thereby obtaining the optical waveguide having the structure shown in Fig. 1e.

S107, depositing a phase-change material onto the exposed surface of the second stop layer in the window by a physical vapor deposition method using a first thin-film deposition process to form a phase-change material thin film. In some embodiments, the phase-change material is sputtered onto the upper surface of the exposed second stop layer in the window using a first sputtering process to form a phase-change material thin film (i.e., the phase-change material layer 03). In some embodiments, the phase-change material may be formed of a chalcogenide compound containing antimony or selenium, or comprise a chalcogenide compound, such as antimony selenide (Sb₂Se₃ or SbSe), antimony sulfide (Sb₂S₃ or SbS), or Ge₂Sb₂Se₄Te (GSST). Alternatively, the phase-change material may include or consist of a compound or alloy containing an elemental combination selected from GeSbTe or VOx; NbOx, GeTe, GeSb, GaSb, AgInSbTe, InSb, InSbTe, InSe, SbTe, TeGeSbS, AgSbSe, SbSe, GeSbMnSn, AgSbTe, AuSbTe, and AlSb. Of course, the phase-change material may also include a mixture of the above compounds, or may be a superlattice. In some embodiments, the first thin-film deposition process is a magnetron sputtering process, the specific procedure of which is: after placing the optical chip obtained from step S105 into a vacuum chamber, the vacuum chamber is evacuated to a vacuum degree of 1×10⁻⁶ Torr; argon gas is introduced, and evacuation is continued to maintain a process vacuum degree below 3.5×10⁻³ Torr; the magnetron sputtering RF power source is turned on, with the power controlled at 10 W to 100 W, and the formed phase-change material thin film is controlled to have a thickness between 1 nm and 1 µm.

Referring to Fig. 3d, taking a strip waveguide as an example, the phase-change material is sputtered directly in the cavity to obtain a phase-change material layer 03 having a thickness of 1 nm-1 µm. In some embodiments, a phase-change material layer 03 having a predetermined thickness H0 is deposited in the window, such that the sum of the predetermined thickness H0 and the fourth thickness H4 is greater than the first thickness H1, so that the groove etched in the second stop layer encapsulates the bottom of the modulation layer and the first region 032 adjacent to the optical waveguide layer 02 (see S1017 in Fig. 2b, and Fig. 1a, 1b, 1e, and 1f), i.e., the etched second stop layer forms an encapsulation layer that partially encapsulates the modulation layer.

In other embodiments, a phase-change material layer 03 having a predetermined thickness H0 is deposited in the window, such that the predetermined thickness H0 is less than or equal to the difference between the third thickness H3 and the fourth thickness H4, so that the groove etched in the second stop layer encapsulates the bottom and all sidewalls of the modulation layer (see S1027 in Fig. 2c, and Fig. 1c and 1d), i.e., the etched second stop layer forms an encapsulation layer that almost fully encapsulates the modulation layer (except for the top surface of the modulation layer).

In other embodiments, as described above, since over-etching is performed on the second stop layer having a thickness of H4 during the window opening process, when a phase-change material layer 03 having a predetermined thickness H0 is deposited in the window, if the sum of the predetermined thickness H0 and the thickness of the first isolation layer is greater than the fourth thickness H4, the groove etched in the second stop layer encapsulates the bottom of the modulation layer and the first region 032 adjacent to the optical waveguide layer 02 (see S1017 in Fig. 2b, and Fig. 1a, 1b, 1e, and 1f), i.e., the etched second stop layer forms an encapsulation layer that partially encapsulates the modulation layer. Of course, if the predetermined thickness H0 is less than or equal to the difference between the fourth thickness H4 and the thickness of the first isolation layer, the groove etched in the second stop layer encapsulates the bottom and all sidewalls of the modulation layer (see S1027 in Fig. 2c, and Fig. 1c and 1d), i.e., the etched second stop layer forms an encapsulation layer that almost fully encapsulates the modulation layer (except for the top surface of the modulation layer).

S109, depositing an oxide layer of the same material as that in step S103 onto the phase-change material layer 03 using a second thin-film deposition process to cover the same, thereby achieving heterogeneous integration of the phase-change material with the optical waveguide platform, and obtaining the optical waveguide. In some embodiments, the second thin-film deposition process deposits an oxide layer of the same material as that in step S103 onto the phase-change material layer 03 to cover the same, thereby achieving heterogeneous integration of the phase-change material with the optical waveguide platform, and obtaining the exemplary optical waveguide of the present invention. Preferably, the second thin-film deposition process is a physical vapor deposition (PVD) or chemical vapor deposition (CVD) process. In some embodiments, the specific procedure for depositing an oxide layer on the phase-change material layer 03 using physical physical vapor deposition (PVD) includes: after placing the optical chip obtained from step S107 into a vacuum chamber, the vacuum chamber is evacuated to a vacuum degree of 1×10⁻⁶ Torr; argon gas is introduced, and evacuation is continued to maintain a process vacuum degree below 3.5×10⁻³ Torr; the magnetron sputtering RF power source is turned on, with the power controlled at 10 W to 200 W, and the formed oxide layer thin film is controlled to have a thickness between 0.1 µm and 3 µm.

In other embodiments, the specific procedure for depositing an oxide layer on the phase-change material layer using chemical vapor deposition (CVD) includes: after placing the optical chip obtained from step S107 into a vacuum chamber, the vacuum chamber is evacuated to a vacuum degree of 1×10⁻⁶ Torr; the substrate is heated to 150°C to 350°C; N₂, SiH4,and N₂O gases are introduced, and the deposition pressure is maintained at 0.2 Torr to 2.0 Torr; the RF power source is turned on, with the power controlled at 20 W to 150 W, and the formed oxide layer thin film is controlled to have a thickness between 0.1 µm and 3 µm. Referring to Fig. 3e, taking a strip waveguide as an example, an oxide layer of the same material as that in step S103 is deposited onto the phase-change material layer 03 by the second thin-film deposition process to obtain a first protective layer 05 having a thickness of H6, thereby achieving heterogeneous integration of the phase-change material with the optical waveguide platform.

Example 5: tability test. Generally, reversible phase change of the phase-change material layer 03 on the waveguide between the crystalline state and the amorphous state can be achieved by voltage pulses. When the phase-change material layer 03 is in the crystalline state, the optical power passing through the waveguide is relatively low, while when the phase-change material layer 03 is in the amorphous state, the optical power passing through the optical waveguide is relatively high. Therefore, the optical power transmitted through the phase-change material-containing optical waveguide can be used to represent the stability of the phase-change material layer.

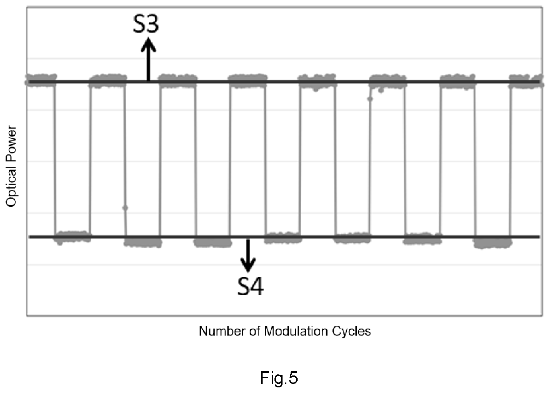

Taking an optical waveguide prepared by a conventional phase-change material integration method as a control group, and the optical waveguide of Example 1 described herein as an experimental group, cyclic modulation of melting and crystallization was performed on the phase-change material layers in the optical waveguides of the control and experimental groups, and the optical powers of the two groups of optical waveguides during cyclic modulation were respectively measured to obtain respective cyclic modulation optical power graphs, as shown in Fig. 4 (control group) and Fig. 5 (experimental group). Specifically, during the cyclic modulation process, the phase-change material layers 03 in the two groups of optical waveguides had the same material and the same thickness (both 30 nm), and the same modulator modulation parameters were used; the pulse voltage for melting the phase-change material layer 03 (changing from crystalline to amorphous) was 9 V with a duration of 200 ns; the pulse voltage for crystallization (changing from amorphous to crystalline) was 3 V with a duration of 1 µs.

Control group: Referring to Fig. 4, under the conventional phase-change material integration method, the phase-change material layer 03 integrated on the optical waveguide was subjected to cyclic modulation of melting-crystallization. After the phase-change material layer 03 was re-melted or re-crystallized, the optical power could not be maintained at the same level, and the optical power fluctuated significantly during the cyclic modulation process (i.e., during cyclic modulation, the optical powers in the two states deviated from their respective mean lines: the mean optical power line S1 in the crystalline state and the mean optical power line S2 in the amorphous state were far apart), indicating that the phase-change material itself underwent changes in properties during the modulation process, resulting in the inability to stably modulate the state of the phase-change material.

Experimental group: Referring to Fig. 5, in the optical waveguide of Example 1 described above, during the cyclic modulation process of melting-crystallization of the phase-change material layer 03, after re-melting or re-crystallization, the optical power remained at the same level, and the optical power fluctuation during the cyclic modulation process was very small (i.e., during cyclic modulation, the optical powers in the two states almost coincided with their respective mean lines: the mean optical power line S3 in the crystalline state and the mean optical power line S4 in the amorphous state, or deviated only slightly), indicating that the phase-change material exhibited stable performance during cyclic modulation, and the state of the phase-change material could be stably modulated under the present structure.

In this document, shape terms including L-shaped, T-shaped and concave-shaped(also referred to as a U-shaped recess) encompass both profiles matching the relevant character outlines in any font and non-standard structures with similar character-like contours. For example, an L-shape may have a laterally extending short protruding edge at the top (shorter than the bottom), as long as the general structure appears to be the corresponding character shape. Similarly, various structures described using geometric shapes in this document include standard geometric shapes as well as non-standard geometric shapes (or similar or approximate shapes). For example, the rectangle in this document includes a standard rectangle in geometric shapes, and may also be a non-standard approximate rectangle. For instance, due to process limitations and other factors, the sidewalls of the sealed cavity formed by the abutment of the first groove and the second groove sidewalls may have a slight inclination, or there may be a slight deviation when the sidewalls of the first groove and the second groove abut, but the overall structure still appears close to rectangular.

It should be noted that, in this document, the terms "comprising," "including," or any other variation thereof are intended to cover non-exclusive inclusion, such that a process, method, article, or device that includes a list of elements includes not only those elements, but also other elements not expressly listed, or also includes elements inherent to such process, method, article, or device. Without further limitation, an element defined by the phrase "comprising a ..." does not exclude the presence of additional identical elements in the process, method, article, or device that includes the element.

The embodiments of the present invention have been described above with reference to the accompanying drawings. However, the present invention is not limited to the above specific embodiments. The above specific embodiments are merely illustrative and not restrictive. Those of ordinary skill in the art, under the teachings of the present invention, may make many other forms without departing from the spirit of the present invention and the scope protected by the claims, and all such forms shall fall within the protection of the present invention.

## Claims

1. An optical waveguide, comprising:
an optical waveguide layer, and a modulation layer located on the optical waveguide layer, wherein a first isolation layer is provided between the optical waveguide layer and the modulation layer, and the modulation layer is covered with a first protective layer; and,
a second isolation layer surrounding the first isolation layer and the modulation layer, wherein the second isolation layer has an inverted L-shaped cross-section; and,
a second protective layer surrounding the first protective layer, the second isolation layer, and the optical waveguide layer;
wherein the modulation layer is enclosed in a sealed cavity together defined by the first protective layer, the first isolation layer and the second isolation layer; and the modulation layer is or comprises a phase-change material layer.

2. The optical waveguide according to claim 1, wherein the first isolation layer and the second isolation layer together define a second groove having an opening facing the first protective layer, and a height from a groove bottom of the second groove to a top opening thereof is greater than or equal to a thickness of the modulation layer.

3. The optical waveguide according to claim 2, wherein the second groove is formed by etching, by a regional etching method, the second isolation layer that is pre-coated on the optical waveguide layer and has a T-shaped or concave-shaped cross-section and the second protective layer coated on the optical waveguide layer and the second isolation layer.

4. The optical waveguide according to any one of claims 1-3, wherein the phase-change material layer is formed by sputtering a phase-change material onto the first isolation layer; and/or the first protective layer is deposited on the phase-change material layer by a physical vapor deposition process or a chemical vapor deposition process.

5. The optical waveguide according to any one of claims 1-3, wherein an upper surface of the first protective layer is flush with an upper surface of the second protective layer.

6. The optical waveguide according to any one of claims 1-3, wherein a thickness of the first isolation layer is 1 nm-100 nm; and/or a length of the first isolation layer extending along a length direction of the optical waveguide is 1 µm-10 µm; and/or a thickness of the first protective layer is 0.1 µm-3 µm; and/or a thickness of the modulation layer is 1 nm-1 µm; and/or a length of the modulation layer extending along the length direction of the optical waveguide is 1 µm-10 µm.

7. The optical waveguide according to any one of claims 1-3, wherein
the phase-change material layer is made of a superlattice material; or
the phase-change material layer is formed of a chalcogenide compound containing antimony or selenium; or
the phase-change material layer comprises a chalcogenide compound, wherein the chalcogenide compound includes at least one of Sb₂Se₃, SbSe, Sb₂S₃, SbS, and Ge₂Sb₂Se₄Te; or
the phase-change material of the phase-change material layer comprises a compound, an alloy, or a mixture thereof, wherein the compound or the alloy contains one or more of germanium, antimony, selenium, and vanadium oxide; wherein the compound includes at least one of NbOx, GeTe, GeSb, GaSb, AgInSbTe, InSb, InSbTe, InSe, SbTe, TeGeSbS, AgSbSe, SbSe, GeSbMnSn, AgSbTe, AuSbTe and AlSb.

8. The optical waveguide according to any one of claims 1-3, wherein the optical waveguide comprises a metal interconnect layer embedded in the second protective layer; and/or the optical waveguide layer has a rectangular or convex-shaped cross-section.

9. The optical waveguide according to any one of claims 1-3, wherein the first protective layer is made of one or more of SiO₂, Al₂O₃, and ITO; and/or the second protective layer is made of one or more of SiO₂, Al₂O₃, and ITO; and/or the first isolation layer is made of one or both of Si₃N₄, and TiN; and/or the second isolation layer is made of one or both of Si₃N₄ and TiN.

10. A method for manufacturing the optical waveguide according to any one of claims 1-9, comprising the steps of:
S1021, integrating an optical waveguide layer on a substrate to form an optical waveguide platform;
S1023, forming, on an outer surface of the optical waveguide layer exposed above the substrate, a second stop layer having a third thickness and a second oxide layer having a second thickness by physical vapor deposition or chemical vapor deposition, wherein the second stop layer is located above the optical waveguide layer and has a T-shaped or concave-shaped cross-section, and a width of a vertical portion of the T-shaped second stop layer is greater than a width of the optical waveguide layer, or a width of the concave-shaped second stop layer is greater than the width of the optical waveguide layer;
S1025, performing a windowing process on the second stop layer and the second oxide layer by regional etching, so that the second stop layer forms, on the optical waveguide layer, a first isolation layer having a fourth thickness and a second isolation layer surrounding the first isolation layer and having an inverted L-shaped cross-section, wherein the fourth thickness is less than the third thickness;
S1027, using a first thin-film deposition process to deposit a phase-change material onto a surface of the first isolation layer by physical vapor deposition, so as to form a phase-change material layer with a predetermined thickness in a window defined by the first isolation layer and the second isolation layer surrounding the first isolation layer, the predetermined thickness being less than or equal to a difference between the third thickness and the fourth thickness;
S1029, using a second thin-film deposition process to deposit an oxide layer of the same material as in step S1023 onto the phase-change material layer to cover the phase-change material layer, so as to obtain a first protective layer having a sixth thickness.

11. An optical waveguide, comprising: an optical waveguide layer, and a modulation layer located on the optical waveguide layer, wherein a first isolation layer is provided between the optical waveguide layer and the modulation layer, the modulation layer being covered with a first protective layer;
a second isolation layer surrounding the first isolation layer and a first region of the modulation layer adjacent to the first isolation layer, and a second protective layer surrounding the first protective layer, a second region of the modulation layer adjacent to the first protective layer, the second isolation layer, and the optical waveguide layer;
wherein the modulation layer is enclosed in a sealed cavity defined by the first protective layer, the second protective layer, the first isolation layer and the second isolation layer, and the modulation layer is or comprises a phase-change material layer.

12. The optical waveguide according to claim 11, wherein the first protective layer and the second protective layer together define a first groove having an inverted concave-shaped cross-section, wherein the second protective layer surrounds the first protective layer and the second region of the modulation layer; the first isolation layer and the second isolation layer together define a second groove having a concave-shaped cross-section, wherein the second isolation layer surrounds the first isolation layer and the first region of the modulation layer; and openings of the first groove and the second groove are arranged opposite to each other, so that the first groove and the second groove together define the sealed cavity having a rectangular cross-section.

13. The optical waveguide according to claim 11, wherein the first protective layer and the second protective layer together define a first groove having an inverted U-shaped cross-section, wherein the second protective layer surrounds the first protective layer and the second region of the modulation layer; the first isolation layer and the second isolation layer together define a second groove having a U-shaped cross-section, wherein the second isolation layer surrounds the first isolation layer and the first region of the modulation layer; and in the same cross-section, a distance between opposite sidewalls of the first groove gradually decreases in a direction approaching the optical waveguide layer, while a distance between opposite sidewalls of the second groove gradually increases in a direction away from the optical waveguide layer, and the opening of the first groove and the opening of the second groove are arranged opposite to each other, so that the sidewalls of the first groove and the sidewalls of the second groove are smoothly connected and together define the sealed cavity having a bowl-shaped or horn-shaped configuration.

14. The optical waveguide according to any one of claims 11-13, wherein the first isolation layer forms a bottom of a cavity having a top opening, the cavity being formed by regionally etching the second protective layer and the second isolation layer pre-coated on the optical waveguide layer; and/or the phase-change material layer is formed by sputtering a phase-change material on the first isolation layer; and/or the first protective layer is deposited on the modulation layer by a physical vapor deposition process or a chemical vapor deposition process.

15. The optical waveguide according to any one of claims 11-13, wherein an upper surface of the first protective layer is flush with an upper surface of the second protective layer.

16. The optical waveguide according to any one of claims 11-13, wherein a thickness of the first isolation layer is 1 nm-100 nm; and/or a length of the first isolation layer extending along a length direction of the optical waveguide is 1 µm-10 µm; and/or a thickness of the first protective layer is 0.1 µm-3 µm; and/or a thickness of the modulation layer is 1 nm-1 µm; and/or a length of the modulation layer extending along the length direction of the optical waveguide is 1 µm-10 µm.

17. The optical waveguide according to any one of claims 11-13, wherein the phase-change material layer is made of a superlattice material; or the phase-change material layer is formed of a chalcogenide compound containing antimony or selenium; or the phase-change material layer comprises the chalcogenide compound, wherein the chalcogenide compound includes at least one of Sb₂Se₃, SbSe, Sb₂S₃, SbS, and Ge₂Sb₂Se₄Te; or the phase-change material of the phase-change material layer comprises a compound, an alloy, or a mixture thereof, wherein the compound or the alloy contains one or more of germanium, antimony, selenium, and vanadium oxide; wherein the compound includes at least one of: NbOx, GeTe, GeSb, GaSb, AgInSbTe, InSb, InSbTe, InSe, SbTe, TeGeSbS, AgSbSe, SbSe, GeSbMnSn, AgSbTe, AuSbTe, and AlSb.

18. The optical waveguide according to any one of claims 11-13, wherein the optical waveguide comprises a metal interconnect layer embedded in the second protective layer; and/or the optical waveguide layer has a rectangular or convex-shaped cross-section.

19. The optical waveguide according to any one of claims 11-13, wherein the first protective layer is made of one or more of SiO₂, Al₂O₃, and ITO; and/or the second protective layer is made of one or more of SiO₂, Al₂O₃, and ITO; and/or the first isolation layer is made of one or both of Si₃N₄ and TiN; and/or the second isolation layer is made of one or both of Si₃N₄ and TiN.

20. A method for manufacturing the optical waveguide according to claim 12, comprising the steps of:
S1011, integrating an optical waveguide layer on a substrate to form an optical waveguide platform;
S1013, forming, on an outer surface of the optical waveguide layer exposed above the substrate, a second stop layer having a first thickness and a second oxide layer having a second thickness by physical vapor deposition or chemical vapor deposition, wherein the second stop layer is located above the optical waveguide layer and has a width greater than a width of the optical waveguide layer;
S1015, performing a windowing process on the second stop layer and the second oxide layer by regional etching, so that the second stop layer forms, on the optical waveguide layer, a first isolation layer having a fourth thickness and the second isolation layer surrounding the first isolation layer, the fourth thickness being less than the first thickness;
S1017, using a first thin-film deposition process to deposit a phase-change material onto a surface of the first isolation layer exposed in a window by physical vapor deposition, so as to form a phase-change material layer with a predetermined thickness, wherein a sum of the predetermined thickness and the fourth thickness is greater than the first thickness;
S1019, using a second thin-film deposition process to deposit an oxide layer of the same material as in step S1013 onto the phase-change material layer to cover the phase-change material layer, so as to obtain a first protective layer having a sixth thickness.

21. A method for manufacturing an optical waveguide, comprising the steps of:
S1021, integrating an optical waveguide layer on a substrate to form an optical waveguide platform;
S1023, forming, on an outer surface of the optical waveguide layer exposed above the substrate, a second stop layer having a fourth thickness and a second oxide layer having a second thickness by physical vapor deposition or chemical vapor deposition, wherein the second stop layer is located above the optical waveguide layer and has a T-shaped or concave-shaped cross-section, and a width of a vertical portion of the T-shaped second stop layer is greater than a width of the optical waveguide layer, or a width of the concave-shaped second stop layer is greater than the width of the optical waveguide layer; and the fourth thickness is 1 nm-100 nm;
S1025, performing a windowing process on the second stop layer and the second oxide layer by regional etching, so that the second stop layer forms, on the optical waveguide layer, a first isolation layer having a thickness less than the fourth thickness, and a second isolation layer surrounding the first isolation layer and having an inverted L-shaped cross-section;
S1027, using a first thin-film deposition process to deposit a phase-change material onto a surface of the first isolation layer by physical vapor deposition, so as to form a phase-change material layer with a predetermined thickness in a window formed by the first isolation layer and the second isolation layer surrounding the first isolation layer, the predetermined thickness being less than or equal to a difference between the fourth thickness and the thickness of the first isolation layer;
S1029, using a second thin-film deposition process to deposit an oxide layer of the same material as in step S1023 onto the phase-change material layer to cover the phase-change material layer, so as to obtain a first protective layer having a sixth thickness.

22. The method according to claim 21, wherein the fourth thickness H4 is determined in advance by simulation.

23. The method according to claim 21, wherein a length of the first isolation layer extending along a length direction of the optical waveguide is 1 µm-10 µm.

24. The method according to claim 21, wherein a thickness of the phase-change material layer is 1 nm-1 µm; and/or a length of the phase-change material layer extending along the length direction of the optical waveguide is 1 µm-10 µm.

25. The method according to any one of claims 21-24, wherein the phase-change material layer is made of a superlattice material.

26. The method according to any one of claims 21-24, wherein the phase-change material layer is formed of a chalcogenide compound containing antimony or selenium, or the phase-change material layer comprises the chalcogenide compound, wherein the chalcogenide compound includes at least one of Sb₂Se₃, SbSe, Sb₂S₃, SbS, and Ge₂Sb₂Se₄Te.

27. The method according to any one of claims 21-24, wherein the phase-change material comprises a compound, an alloy or a mixture thereof, wherein the compound or alloy contains one or more of germanium, antimony, selenium, and vanadium oxide; wherein the compound includes at least one of NbOx, GeTe, GeSb, GaSb, AgInSbTe, InSb, InSbTe, InSe, SbTe, TeGeSbS, AgSbSe, SbSe, GeSbMnSn, AgSbTe, AuSbTe, and AlSb.

28. The method according to any one of claims 21-24, wherein the second stop layer is made of one or both of Si₃N₄ and TiN.

29. An optical waveguide manufactured by the method according to any one of claims 21-28, comprising: an optical waveguide layer, and a modulation layer located on the optical waveguide layer, wherein a first isolation layer is provided between the optical waveguide layer and the modulation layer, the modulation layer is covered with a first protective layer; a second isolation layer surrounding the first isolation layer and the modulation layer and having an inverted L-shaped cross-section, and a second protective layer surrounding the first protective layer, the second isolation layer, and the optical waveguide layer; wherein the modulation layer is enclosed in a sealed cavity defined by the first protective layer, the first isolation layer and the second isolation layer, and the modulation layer is or comprises a phase-change material layer; and wherein a thickness of the first isolation layer is less than the fourth thickness, and the fourth thickness is 1 nm-100 nm.

30. The optical waveguide according to claim 29, wherein the first isolation layer and the second isolation layer together define a second groove having an opening facing the first protective layer, and a height from a groove bottom of the second groove to a top opening thereof is greater than or equal to a thickness of the modulation layer.

31. A method for manufacturing an optical waveguide, comprising the steps of:
S1011, integrating an optical waveguide layer on a substrate to form an optical waveguide platform;
S1013, forming, on an outer surface of the optical waveguide layer exposed above the substrate, a second stop layer having a fourth thickness and a second oxide layer having a second thickness by physical vapor deposition or chemical vapor deposition, wherein the second stop layer is located above the optical waveguide layer and has a width greater than a width of the optical waveguide layer, and the fourth thickness is 1 nm-100 nm;
S1015, performing a windowing process on the second stop layer and the second oxide layer by regional etching, so that the second stop layer forms, on the optical waveguide layer, a first isolation layer having a thickness less than the fourth thickness, and a second isolation layer surrounding the first isolation layer;
S1017, using a first thin-film deposition process to deposit a phase-change material onto a surface of the first isolation layer exposed in a window by physical vapor deposition, so as to form a phase-change material layer with a predetermined thickness, wherein a sum of the predetermined thickness and the thickness of the first isolation layer is greater than the fourth thickness;
S1019, using a second thin-film deposition process to deposit an oxide layer of the same material as in step S1013 onto the phase-change material layer to cover the phase-change material layer, so as to obtain a first protective layer having a sixth thickness.

32. The method according to claim 31, wherein a length of the first isolation layer extending along a length direction of the optical waveguide is 1 µm-10 µm.

33. The method according to claim 31, wherein a thickness of the phase-change material layer is 1 nm-1 µm; and/or a length of the phase-change material layer extending along the length direction of the optical waveguide is 1 µm-10 µm.

34. The method according to any one of claims 31-33, wherein the phase-change material layer is made of a superlattice material.

35. The method according to any one of claims 31-33, wherein the phase-change material layer is formed of a chalcogenide compound containing antimony or selenium, or the phase-change material layer comprises a chalcogenide compound, wherein the chalcogenide compound includes at least one of Sb₂Se₃, SbSe, Sb₂S₃, SbS, and Ge₂Sb₂Se₄Te.

36. The method according to any one of claims 31-33, wherein the phase-change material comprises a compound, an alloy or a mixture thereof, wherein the compound or alloy contains one or more of germanium, antimony, selenium, and vanadium oxide; wherein the compound includes at least one of NbOx, GeTe, GeSb, GaSb, AgInSbTe, InSb, InSbTe, InSe, SbTe, TeGeSbS, AgSbSe, SbSe, GeSbMnSn, AgSbTe, AuSbTe, and AlSb.

37. The method according to any one of claims 31-33, wherein the second oxide layer is made of one or more of SiO₂, Al₂O₃, and ITO.

38. The method according to any one of claims 31-33, wherein the second stop layer is made of one or both of Si₃N₄ and TiN.

39. An optical waveguide manufactured by the method according to any one of claims 31-38, comprising: an optical waveguide layer, and a modulation layer located on the optical waveguide layer, wherein a first isolation layer is provided between the optical waveguide layer and the modulation layer, the modulation layer is covered with a first protective layer; a second isolation layer surrounding the first isolation layer and a first region of the modulation layer adjacent to the first isolation layer, and a second protective layer surrounding the first protective layer, a second region of the modulation layer adjacent to the first protective layer, the second isolation layer, and the optical waveguide layer; wherein the modulation layer is enclosed in a sealed cavity defined by the first protective layer, the second protective layer, the first isolation layer and the second isolation layer, and the modulation layer is or comprises a phase-change material layer; and wherein a thickness of the first isolation layer is less than the fourth thickness, and the fourth thickness is 1 nm-100 nm.

40. The optical waveguide according to claim 39, wherein the first protective layer and the second protective layer together define a first groove having an inverted concave-shaped cross-section, wherein the second protective layer surrounds the first protective layer and the second region of the modulation layer; the first isolation layer and the second isolation layer together define a second groove having a concave-shaped cross-section, wherein the second isolation layer surrounds the first isolation layer and the first region of the modulation layer; and openings of the first groove and the second groove are arranged opposite to each other, so that the first groove and the second groove together define the sealed cavity having a rectangular cross-section; or, the first protective layer and the second protective layer together define a first groove having an inverted U-shaped cross-section, wherein the second protective layer surrounds the first protective layer and the second region of the modulation layer; the first isolation layer and the second isolation layer together define a second groove having a U-shaped cross-section, wherein the second isolation layer surrounds the first isolation layer and the first region of the modulation layer; and in the same cross-section, a distance between opposite sidewalls of the first groove gradually decreases in a direction approaching the optical waveguide layer, while a distance between opposite sidewalls of the second groove gradually increases in a direction away from the optical waveguide layer, and the opening of the first groove and the opening of the second groove are arranged opposite to each other, so that the sidewalls of the first groove and the sidewalls of the second groove are smoothly connected and together define the sealed cavity having a bowl-shaped or horn-shaped configuration.
